# EUROPEAN PATENT SPECIFICATION

(11) **EP 2 235 412 B1**
(45) Date of publication and mention of the grant of the patent: **31.08.2011**
(21) Application number: 08850105.1
(22) Date of filing: 13.11.2008
(51) Int. Cl.: F16K 43/00, F16K 3/02

(54) **GATE VALVE WITH INTEGRATED HYDRAULIC ACTUATOR FOR SUBSEA USE**
SCHIEBERVENTIL MIT INTEGRIERTEM HYDRAULISCHEN STELLGLIED ZUR VERWENDUNG UNTER WASSER
VANNE DE RÉGULATION COMPORTANT UN ACTIONNEUR HYDRAULIQUE INTÉGRÉ POUR UTILISATION SOUS-MARINE

(30) Priority: 14.11.2007 IT PR20070087
(43) Date of publication of application: 06.10.2010
(73) Proprietor: BIFFI ITALIA S.r.L., I-29017 Fiorenzuola D'Arda (Piacenza) (IT); Tyco Valves & Controls Italia S.r.L., 29018 Lugagnano Val D'arda (IT)
(72) Inventor: ALFIERI, Giordano, I-29017 Fiorenzuola D'arda (Piacenza) (IT); MANZETTI, Bruno, I-29018 Lugagnano Val D'arda (Piacenza) (IT)
(74) Representative: Grünecker, Kinkeldey, Stockmair & Schwanhäusser Anwaltssozietät
(86) International application number: PCT/IB2008/054763
(87) International publication number: WO 2009/063418

(56) References cited:
- DE-A1- 2 544 352
- FR-A- 1 534 113
- US-A- 3 003 744
- US-A- 3 412 750
- US-A- 4 274 432
- US-A- 6 125 874
- US-A1- 2002 124 889

## Description

This invention relates to a gate valve with integrated hydraulic actuator, particularly suitable for subsea use. Document US2002/0124889 discloses such a valve.

Namely, the valve with the integrated actuator as disclosed and claimed herein has two metal backseats, i.e. lower and upper backseats, and two packings on the stem that connects the actuator and the valve, whereby:
- a primary seal is provided (by the upper backseat) against oil leakages from the pressure balancing circuit into the valve or, even worse, into the sea through the safety valve;
- a primary seal is provided from the outside (by the lower backseat), to prevent pressure stresses on the packing, whereas protection from the hydraulic circuit oil is provided by appropriate O-rings.

Also, an advantage provided by the dual-packing solution is that, for example when the valve is closed, the first packing will be energized by the pressure and ensure the seal, whereas the second packing will be only energized when the first packing cannot ensure its sealing action, wherefore the valve life will be twice as long, concerning inside-to-outside seals.

These objects and advantages are achieved by the gate valve with integrated hydraulic actuator for subsea use according to this invention, which is characterized as defined in the annexed claims.

This and other features will be more apparent from the following description of a few embodiments, which are shown by way of example and without limitation in the accompanying drawings, in which:
- Figure 1 is an overall view of a gate valve assembly with integrated hydraulic actuator for subsea use,
- Figure 2 shows a detail of the valve as shown in Figure 1 with the stem abutting by the upper backseat,
- Figure 3 shows a detail of the valve as shown in Figure 1 with the stem abutting by the lower backseat,
- Figure 4 shows a variant of the actuator-valve fixation arrangement.

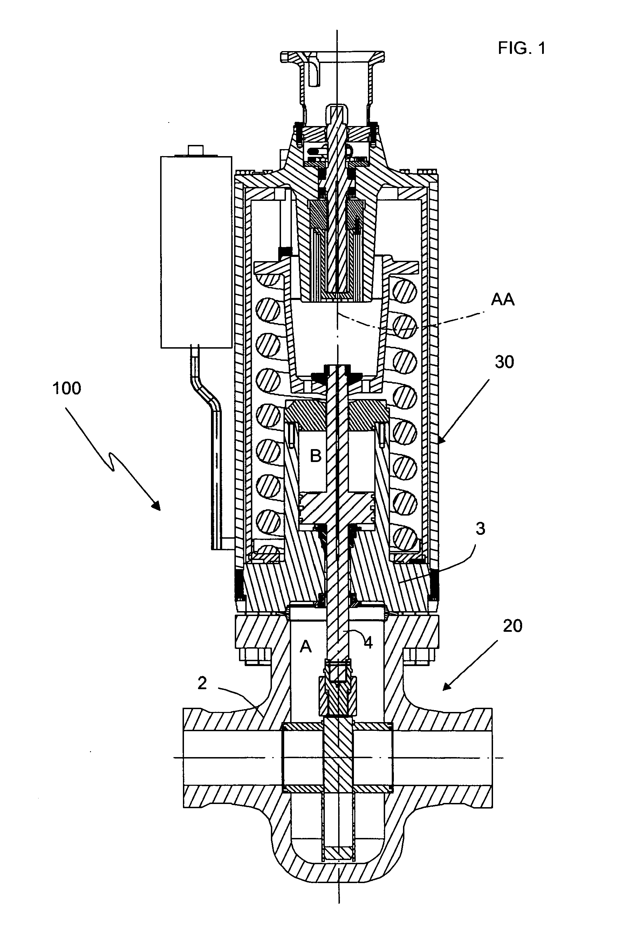

Referring to Figure 1, numeral 100 designates an assembly composed of a gate valve 20 with a hydraulic actuator 30 fixed to its upper end for controlling the valve 20 through its stem 4; the assembly as disclosed and claimed herein may find convenient application for subsea use.

In a first embodiment, the actuator 30 is fixed to the valve 20 via a flanged body 3 which is attached to the valve body 2 by suitable fastener means of known type, such as bolts.

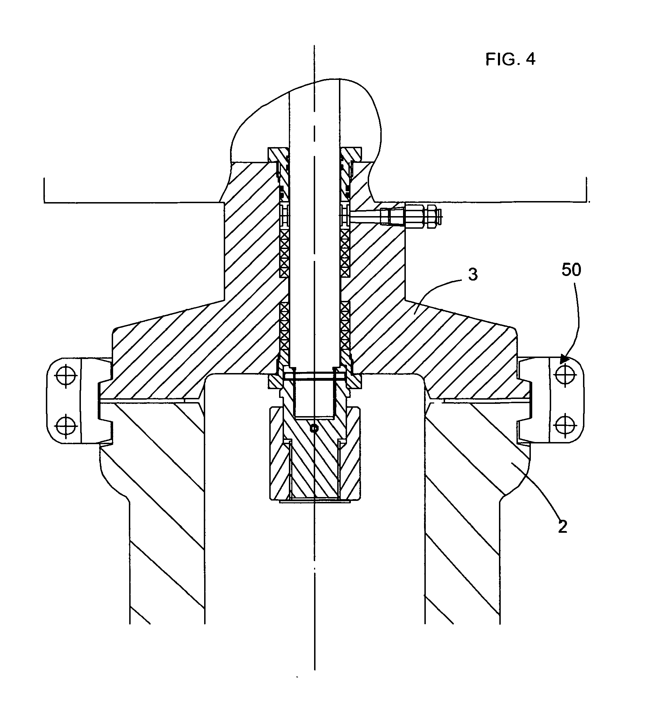

According to another fixation variant, as shown in Figure 4, the actuator 30 and valve 20 may be integrated to each other by a jaw-type system 50 which is adapted to hold and clamp the flanged body 3 and the valve body 2 together

Preferably, a seal 5 is interposed between the contact surfaces of the valve body 2 and the flanged body 3.

The metal stem 4 is free to slide along the central axis of the assembly of the valve 20 and actuator 30 as described above, in response to the pressures in the chamber B of the piston of the actuator 30.

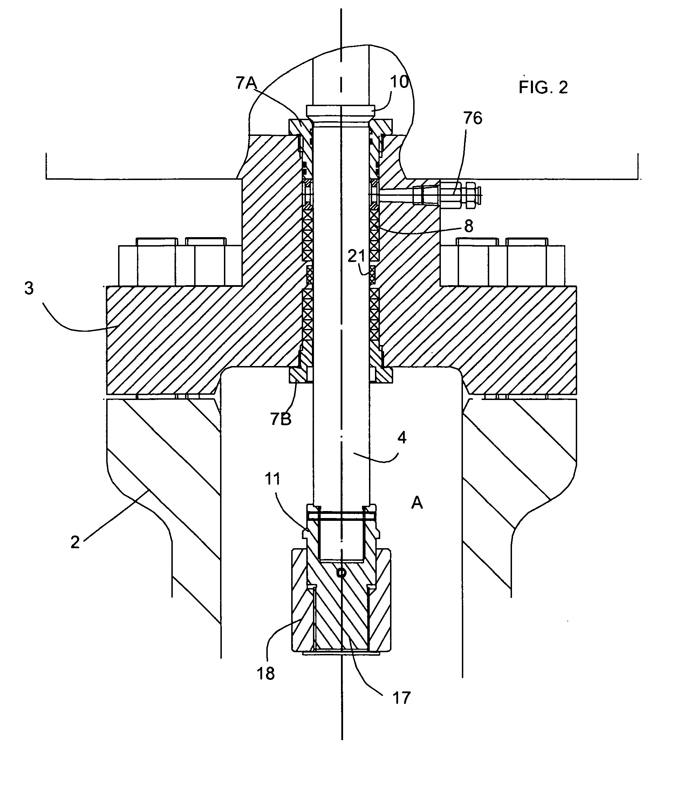

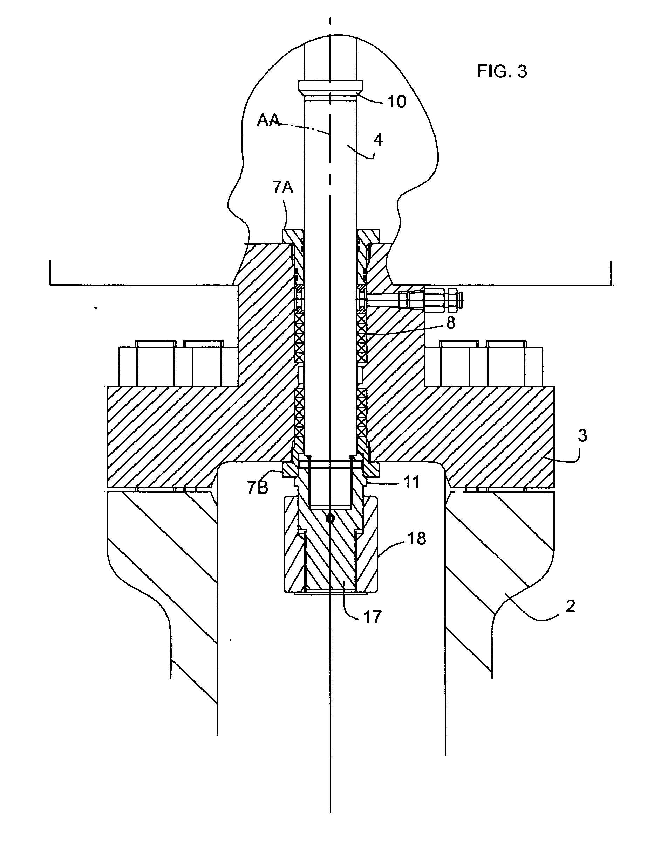

Referring to Figures 2 and 3, the stem 4 is shown to be guided by two threaded bushes 7A and 7B and a central shoe 21: said bushes 7A and 7B being screwed onto the ends of the corresponding receiving hole.

Also, two packings 8 are accommodated in the receiving hole, namely a first packing located on the side of the upper bush 7A and a second packing on the side of the lower bush 7B.

The figures also show that a gap is formed between the first packing 8 and the corresponding bush 7A, for accommodating a safety valve 76.

Finally, various O-rings 94 are provided for preventing any oil leakage from the upper hydraulic circuit.

The stem 4 has two metal backseats 10 and 11, i.e. an upper backseat on the side of the actuator 30 and a lower backseat on the side of the valve 20: the first one, designated by numeral 10, is adapted to seal against the bush 7A, and the second one seals against the bush 7B.

The upper backseat 10 may be formed from solid material on the stem 4 and the lower backseat, designated by numeral 11 is conveniently screwed onto the lower end of the stem 4, i.e. the end that fits into the valve body 2 and is namely formed on a threaded cylindrical element 17 that is screwed onto the corresponding shank of the stem 4.

An additional element 18 is axially screwed onto said element 17, for alignment and tolerance compensation during assembly, so that the valve 20 opens or closes the entire passage for the process fluid.

In view of the above it appears that the stem 4, guided by the bushes 7A, 7B and the central shoe 21 may slide to a certain extent along the axis AA until the metal backseat 10 or 11 abuts against the corresponding bush 7A or 7B, whereupon it provides a perfect seal on its side.

The above arrangements are shown in Figures 2 and 3, in which the stem 4 is shown in its two end configurations within the valve 2: in the configuration of Figure 2, the upper backseat 10 seals against the corresponding bush by its conical surface 10a, and in the configuration of Figure 3, the lower backseat 11 is shown to seal onto the corresponding bush 7B by its conical surface 11a.

Possibly, as a variant embodiment, cylindrical tailpieces may extend from the conical surfaces, for fitting into corresponding cavities of the bushes 7A, 7B.

The provision of two metal backseats 10 and 11 provides the advantage of establishing a primary seal by the upper backseat 10 against oil leakages from the pressure balancing circuit into the valve, or even worse into the sea through the safety valve 76; and establishing a primary seal from the outside by the lower backseat, to prevent pressure of process fluid, i.e. the fluid being shut off, from stressing the packing 8, whereas protection from the hydraulic circuit oil is provided on the upper part by appropriate O-rings.

The dual packing solution provides the advantage that, for instance, when the valve is closed, the first packing is energized by pressure and ensures the seal, whereas the second packing is only energized when the first packing cannot ensure its sealing action: by this arrangement, the valve life will be twice as long, concerning inside-to-outside seals.

When the valve is open (still from the inside) the pressure in the chamber A and, in this case, the lower backseat ensures a primary seal against the outside.

## Claims

1. A gate valve (20) with an integrated hydraulic actuator (30), of the type comprising a body or housing (2), with the body (3) of the hydraulic actuator (30) fixed to its upper end, for controlling the valve (20) by a stem (4) that slides axially in response to pressures within the chamber (B) of the piston of the actuator (30), **characterized in that** the stem (4) has two metal backseats (10, 11), an upper one on the side of the actuator (30) and a lower one on the side of the valve (20); said backseats (10, 11) being adapted to seal against corresponding stem (4) guiding bushes (7A, 78) which are located within the corresponding hole for receiving the stem (4); wherein said hole for receiving the stem (4) accommodates two packings (8), i.e. a first upper packing in the proximity of the first bush (7A) and a second lower packing (8) in the proximity of the second bush (7B); wherein the first upper packing (8) is adapted to be energized by pressure and to ensure the seal when the valve is in the closed state, whereas the second lower packing (8) is adapted to be energized only when the first upper packing (8) cannot ensure its sealing action.

2. A gate valve (20) with an integrated hydraulic actuator (30) as claimed in claim 1, **characterized in that** said upper backseat (10) is formed from solid, material on the stem (4) and the lower backseat (11) is formed on a threaded cylindrical element (17) that is screwed onto the corresponding shank of the stem (4).

3. A gate valve (20) with an integrated hydraulic actuator (30) as claimed in claim 2, **characterized in that** an additional element (18) is axially screwed onto said element (17) for alignment and tolerance compensation during assembly, so that the valve (20) opens or closes the entire passage for the process fluid.

4. A gate valve (20) with an integrated hydraulic actuator (30) as claimed in claim 1, **characterized in that** the stem (4) is centered and axially guided along the axis (AA) by the bushes (7A, 7B) and a central shoe(21) slides along said axis (AA) until one of said two metal backseat (10, 11) abuts against the corresponding bush (7A, 7B), whereupon it provides a perfect seal on its side.

5. A gate valve (20) with an integrated hydraulic actuator (30) as claimed in claim 1, **characterized in that** a safety valve (76) is located between said first upper packing (8) and the corresponding bush (7A) .

6. A gate valve (20) with an integrated hydraulic actuator (30) as claimed in claim 1, **characterized in that** said actuator (30) is fixed to the valve (20) by suitable fastener means of known type, such as bolts.

7. A gate valve (20) with an integrated hydraulic actuator (30) as claimed in claim 1, **characterized in that** the actuator (30) and the valve (20) are integrated to each other by a jaw-type system (50) which is adapted to hold and clamp the flanged body (3) and the valve body (2) together.

## Patentansprüche

1. Schieberventil (20) mit integriertem hydraulischem Stellglied (30), in der Bauart mit einem Körper bzw. Gehäuse (2) und an seiner Oberseite befestigtem Körper (3) des hydraulischen Stellglieds (30), zur Steuerung des Ventils (20) über eine Spindel (4), welche sich in Reaktion auf Drücke im Inneren der Kammer (B) des Kolbens des Stellglieds (30) axial verschiebt, **dadurch gekennzeichnet, dass** die Spindel (4) zwei metallene Rückdichtungen (10, 11), nämlich eine obere auf Seite des Stellglieds (30) und eine untere auf Seite des Ventils (20) besitzt; und dass besagte Rückdichtungen (10, 11) so ausgelegt sind, dass sie zu den entsprechenden Führungsbuchsen (7A, 7B) der Spindel (4) hin abdichten, welche in der entsprechenden Öffnung, durch die die Spindel (4) geführt wird, untergebracht sind; wobei in besagter Öffnung, durch welche die Spindel (4) geführt wird, zwei Packungen (8) untergebracht sind, nämlich eine erste obere Packung nahe der ersten Buchse (7A) und eine zweite untere Packung (8) nahe der zweiten Buchse (7B); wobei die erste obere Packung (8) so ausgelegt ist, dass sie durch Druck unter Spannung gesetzt wird und die Dichtung gewährleistet, wenn das Ventil geschlossen ist, während die zweite untere Packung (8) so ausgelegt ist, dass sie nur dann unter Spannung gesetzt wird, wenn die erste obere Packung (8) die Dichtung licht gewährleisten kann.

2. Schieberventil (20) mit integriertem hydraulischem Stellglied (30) nach Anspruch 1, **dadurch gekennzeichnet, dass** besagte obere Rückdichtung (10) an der Spindel (4) aus Massivmaterial und die untere Rückdichtung (11) an einem zylindrischen Element mit Gewinde (17) ausgebildet ist, welches auf den entsprechenden Schaft der Spindel (4) geschraubt wird.

3. Schieberventil (20) mit integriertem hydraulischem Stellglied (30) nach Anspruch 2, **dadurch gekennzeichnet, dass** ein Zusatzelement (18) zum Fluchtungs- und Toleranzausgleich bei der Montage axial auf besagtes Element (17) geschraubt wird, so dass das Ventil (20) den gesamten Durchfluss für das Prozessmedium freigibt bzw. verschließt.

4. Schieberventil (20) mit integriertem hydraulischem Stellglied (30) nach Anspruch 1, **dadurch gekennzeichnet, dass** die Spindel (4) von den Buchsen (7A, 7B) mittig entlang der Achse (AA) ausgerichtet und axial auf dieser geführt wird und ein zentrales Gleitstück (21) sich entlang besagter Achse (AA) verschiebt, bis eine der zwei besagten metallenen Rückdichtungen (10, 11) an die entsprechende Buchse (7A, 7B) stößt und **dadurch** eine perfekte Dichtung auf seiner Seite herstellt.

5. Schieberventil (20) mit integriertem hydraulischem Stellglied (30) nach Anspruch 1, **dadurch gekennzeichnet, dass** zwischen besagter erster oberer Packung (8) und der entsprechenden Buchse (7A) ein Sicherheitsventil (76) angeordnet ist.

6. Schieberventil (20) mit integriertem hydraulischem Stellglied (30) nach Anspruch 1, **dadurch gekennzeichnet, dass** besagtes Stellglied (30) mittels geeigneter Befestigungsmittel bekannter Bauart, wie etwa Bolzen, am Ventil (20) befestigt ist.

7. Schieberventil (20) mit integriertem hydraulischem Stellglied (30) nach Anspruch 1, **dadurch gekennzeichnet, dass** Stellglied (30) und Ventil (20) über eine Art Backensystem (50) miteinander verbunden sind, welches so ausgelegt ist, dass es den mit einem Flansch versehenen Körper (3) und den Ventilkörper (2) zusammenhält und miteinander verklemmt.

## Revendications

1. Robinet-vanne (20) avec un dispositif d'actionnement hydraulique intégré (30), du type comprenant un corps ou un boîtier (2), le corps (3) du dispositif d'actionnement hydraulique (30) étant fixé à son extrémité supérieure, pour commander la vanne (20) par une tige (4) qui coulisse axialement en réponse à des pressions à l'intérieur de la chambre (B) du piston du dispositif d'actionnement (30), **caractérisé en ce que** la tige (4) a deux sièges d'appui en métal (10, 11), un supérieur sur le côté du dispositif d'actionnement (30) et un inférieur sur le côté de la vanne (20) ; lesdits sièges d'appui (10, 11) étant adaptés pour étancher contre la tige correspondante (4) des douilles de guidage (7A, 7B) qui sont logées à l'intérieur du trou correspondant pour recevoir la tige (4) ; dans lequel ledit trou pour recevoir la tige (4) reçoit deux garnitures d'étanchéité (8), c'est-à-dire une première garniture d'étanchéité supérieure à proximité de la première douille (7A) et une seconde garniture d'étanchéité inférieure (8) à proximité de la seconde douille (7B) ; dans lequel la première garniture d'étanchéité supérieure (8) est adaptée pour être excitée par pression et assurer l'étanchéité lorsque la soupape est à l'état fermé, tandis que la seconde garniture d'étanchéité inférieure (8) est adaptée pour être excitée uniquement lorsque la première garniture d'étanchéité supérieure (8) ne peut pas assurer son effet d'étanchéité.

2. Robinet-vanne (20) avec un dispositif d'actionnement hydraulique intégré (30) selon la revendication 1, **caractérisé en ce que** ledit siège d'appui supérieur (10) est formé d'un matériau solide sur la tige (4) et le siège d'appui inférieur (11) est formé sur un élément cylindrique taraudé (17) qui est vissé sur l'arbre correspondant de la tige (4).

3. Robinet-vanne (20) avec un dispositif d'actionnement hydraulique intégré (30) selon la revendication 2, **caractérisé en ce qu'**un élément additionnel (18) est vissé axialement sur ledit élément (17) pour assurer un alignement et une compensation de tolérance au cours de l'assemblage, de sorte que la vanne (20) ouvre ou ferme l'ensemble du passage pour le fluide de traitement.

4. Robinet-vanne (20) avec un dispositif d'actionnement hydraulique intégré (30) selon la revendication 1, **caractérisé en ce que** la tige (4) est centrée et guidée axialement le long de l'axe (AA) par les douilles (7A, 7B) et un patin central (21) coulisse le long dudit axe (AA) jusqu'à ce que l'un desdits deux sièges d'appui en métal (10, 11) viennent s'appuyer contre la douille correspondante (7A, 7B), moyennant quoi il fournit un joint étanche parfait sur son côté.

5. Robinet-vanne (20) avec un dispositif d'actionnement hydraulique intégré (30) selon la revendication 1, **caractérisé en ce qu'**une soupape de sureté (76) est placée entre ladite première garniture d'étanchéité supérieure (8) et la douille correspondante (7A).

6. Robinet-vanne (20) avec un dispositif d'actionnement hydraulique intégré (30) selon la revendication 1, **caractérisé en ce que** ledit dispositif d'actionnement (30) est fixé à la vanne (20) par des moyens de fixation appropriés de type connu, tels que des boulons.

7. Robinet-vanne (20) avec un dispositif d'actionnement hydraulique intégré (30) selon la revendication 1, **caractérisé en ce que** le dispositif d'actionnement (30) et la vanne (20) font partie intégrante l'un de l'autre par un système de type à mors (50) qui est adapté pour supporter et serrer le corps bridé (3) et le corps de soupape (2) ensemble.
